Europäisches Patentamt

European Patent Office

Office européen des brevets

(19)

(11) Veröffentlichungsnummer: **0 200 041 B1**

(12) **EUROPÄISCHE PATENTSCHRIFT**

(45) Veröffentlichungstag der Patentschrift: 27.02.91

(51) Int. Cl.⁵: **G01S 15/60**

(21) Anmeldenummer: 86104818.9

(22) Anmeldetag: 09.04.86

(54) **Verfahren zur Bestimmung der Geschwindigkeit eines Wasserfahrzeugs.**

(30) Priorität: 20.04.85 DE 3514363

(43) Veröffentlichungstag der Anmeldung:
05.11.86 Patentblatt 86/45

(45) Bekanntmachung des Hinweises auf die
Patenterteilung:
27.02.91 Patentblatt 91/09

(84) Benannte Vertragsstaaten:
**FR GB IT NL SE**

(56) Entgegenhaltungen:
**FR-A- 2 441 180**
**GB-A- 2 040 454**
**US-A- 3 228 027**
**US-A- 3 277 430**

(73) Patentinhaber: **Fried. Krupp Gesellschaft mit
beschränkter Haftung
Altendorfer Strasse 103
D-4300 Essen 1(DE)**

(72) Erfinder: **Rathjen, Dirk
Am Rüten 68
D-2800 Bremen 33(DE)**

EP 0 200 041 B1

**Beschreibung**

Die Erfindung betrifft ein Verfahren zur Bestimmung der Geschwindigkeit eines Wasserfahrzeugs der im Oberbegriff des Anspruchs 1 angegebenen Gattung.

Bei einem bekannten Verfahren dieser Art (DE 29 01 292 A1 oder GB 20 40 454 A) wird ein der Schiffsgeschwindigkeit proportionaler Wert laufend dadurch ermittelt, daß die in jeder Empfangsrichtung erhaltenen Dopplerfrequenzen voneinander subtrahiert, auf die Sendefrequenz bezogen und mit dem Reziprokwert des Kosinus des Abstrahlwinkels $\alpha$ multipliziert werden. Zur Überprüfung des Ergebnisses der Geschwindigkeitsbestimmung werden zusätzlich die Dopplerfrequenzen aus beiden Empfangsrichtungen addiert, auf die Sendefrequenz bezogen und mit dem Reziprokwert des Sinus des Abstrahlwinkels $\alpha$ multipliziert. Weiterhin werden laufend in einer quer zur Fahrzeuglängsachse liegenden Ebene nach Steuer- und backbord unter einem gleichen Neigungswinkel akustische Signale mit einer zweiten Sendefrequenz abgestrahlt, aus den steuerbord und backbord erhaltenen Empfangssignalen die Dopplerfrequenzen bestimmt, die Dopplerfrequenzen aus beiden Empfangsrichtungen addiert, auf die zweite Sendefrequenz bezogen und mit dem Reziprokwert des Sinus des Abstrahlwinkels multipliziert. Die beiden so gewonnenen Prüfwerte, die jeweils ein Maß für die Geschwindigkeitskomponente in Hochachse des Schiffes sind, werden miteinander verglichen. Weichen sie wesentlich voneinander ab, wird der zugehörige Wert der bestimmten Schiffsgeschwindigkeit unterdrückt. Nur wenn die beiden Prüfwerte annähernd übereinstimmen, wird der Wert der bestimmten Schiffsgeschwindigkeit zur Anzeige freigegeben.

Die nach diesem Verfahren ermittelte Schiffsgeschwindigkeit ist jedoch mit einem relativ großen Fehler behaftet, da bei der Geschwindigkeitsbestimmung weder ein Trimm des Schiffes noch das Verhalten des Schiffes bei starken Wellenbewegungen (Dünung) oder das Stampfen des Schiffes berücksichtigt werden. Die Prüfeinrichtung dient nur der Kontrolle der ordnungsgemäßen Funktion der Meßvorrichtung, nicht aber der Verbesserung der Genauigkeit in der Bestimmung der Schiffsgeschwindigkeit über Grund. Insbesondere bei Koppelnavigation ist es jedoch unerläßlich, die Schiffsgeschwindigkeit mit einem extrem hohen Genauigkeitsgrad zu bestimmen, da ansonsten die berechnete Schiffsposition nach längerer Fahrt erheblich von der tatsächlichen Schiffsposition abweicht.

Der Erfindung liegt die Aufgabe zugrunde, ein Verfahren zur Bestimmung der Geschwindigkeit eines Wasserfahrzeugs derart zu verbessern, daß die den Meßergebnissen anhaftenden Fehlertoleranzen sehr viel kleiner sind. Die Aufgabe ist bei einem Verfahren der im Oberbegriff des Anspruchs genannten Art erfindungsgemäß durch die Merkmale im Kennzeichenteil des Anspruchs 1 gelöst.

Mit dem erfindungsgemäßen Verfahren wird die tatsächliche Fahrzeuggeschwindigkeit mit extrem hoher Genauigkeit bestimmt, selbst dann, wenn das Wasserfahrzeug vertrimmt ist. Der auch hier erforderliche Wert der tatsächlichen Schallgeschwindigkeit in Wasser, kann durch Messung oder mit Hilfe von Tabellen bestimmt werden, wobei selbst eine relativ große Ungenauigkeit in der Bestimmung der Schallgeschwindigkeit die Genauigkeit der ermittelten Fahrzeuggeschwindigkeit nicht wesentlich beeinträchtigt. So verursacht ein Fehler von z.B. 10 m/s in der Bestimmung der Schallgeschwindigkeit einen Fehler von nur ca. 0,35 $^{\circ}/_{\circ\circ}$ bei der Berechnung der Fahrzeuggeschwindigkeit. Fehlertoleranzen von <1 % sind aber bei der üblichen Messung oder Bestimmung der Schallgeschwindigkeit ohne weiteres einzuhalten.

Das erfindungsgemäße Verfahren mißt hochgenau und zuverlässig die Geschwindigkeit von seegängigen Oberflächen-Wasserfahrzeugen, die starken Dünungen ausgesetzt sind und mitunter extreme Stampfbewegungen ausführen. Dies gilt in gleicher Weise für die Bestimmung der Geschwindigkeitskomponenten in Horizontal- und Vertikalrichtung eines Unterwasserfahrzeugs mit oder ohne Trimm, bei welchem der Neigungswinkel $\beta$ weniger durch das Stampfen als durch den Anstellwinkel der Fahrzeuglängsachse beim Ein- oder Auftauchen bzw. bei Schrägfahrten in Wasser bestimmt ist.

Das erfindungsgemäße Verfahren ist ebenso hochgenau für Oberflächen-Wasserfahrzeuge, die in relativ ruhigen Gewässern, z.B. Flüssen oder Binnenseen, fahren, wo Stampfbewegungen des Wasserfahrzeugs vernachlässigbar gering sind. Hier könnte man zur Vereinfachung des Verfahrens auf die Messung des Neigungswinkels $\beta$, was vorzugsweise mit einem Inklinometer erfolgt, verzichten, da bei fehlenden Wellenbewegungen der Neigungswinkel $\beta$ nur von der Trimmlage des Schiffes bestimmt ist und der Differenzwinkel $\epsilon$ zu Null wird. Die berechnete Fahrzeuggeschwindigkeit entspricht der tatsächlichen Geschwindigkeit des Wasserfahrzeugs über Grund.

Eine vorteilhafte Weiterbildung der Erfindung ergibt sich aus Anspruch 3. Durch diese Maßnahme erübrigt sich die Bestimmung des von der Schallgeschwindigkeit abhängigen Abstrahlwinkels $\alpha$ der Sende- und Empfangsrichtung. K kann als eine dem System immanente Konstante angegeben werden, solange die Phasenverschiebung $\phi$ der Wandlersignale im Sende- und Empfangsfall unverändert bleibt.

Das erfindungsgemäße Verfahren wird an einem durch die Zeichnung illustrierten Ausführungsbeispiel im folgenden beschrieben. Es zeigen:

2

Fig. 1    eine schematische Darstellung eines stampfenden Oberflächenschiffes mit Trimm, das momentan die ansteigende Flanke eines Wellenbergs abreitet,

Fig. 2    ein Blockschaltbild eines nach dem erfindungsgemäßen Verfahren arbeitenden Dopplerlogs.

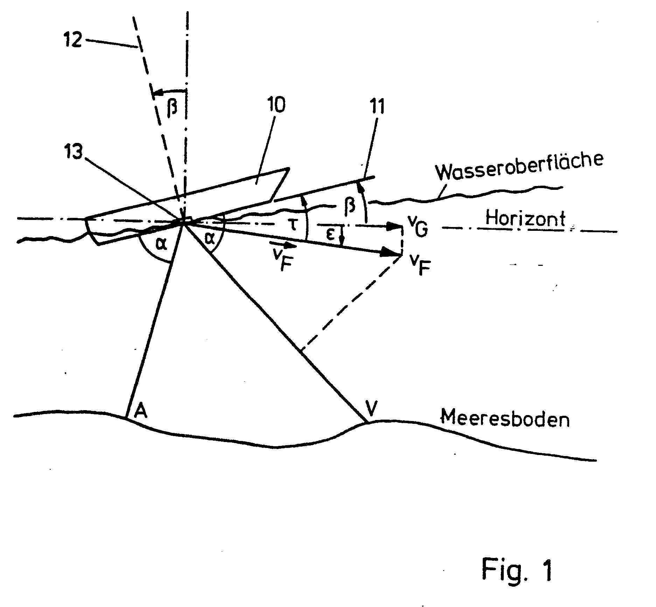

In Fig. 1 sind das Schiff mit 10, seine zur Längsachse parallel verlaufende Kiellinie mit 11 und seine senkrecht auf der Kiellinie 11 bzw. Längsachse stehende Hochachse mit 12 bezeichnet. Das fahrende Schiff 10 weist einen momentanen Geschwindigkeitsvektor

$$\overrightarrow{v}_F$$

mit dem Betrag $V_F$ auf. Der Winkel zwischen dem Geschwindigkeitsvektor

$$\overrightarrow{v}_F$$

und der Kiellinie 11 bzw. Längsachse des Schiffes 10 ist als Hilfswinkel $\tau$, der Winkel zwischen der Horizontalen und der Kiellinie 11 bzw. Längsachse des Schiffes 10 als Neigungswinkel $\beta$ und der Winkel zwischen der Horizontalen und dem momentanen Geschwindigkeitsvektor

$$\overrightarrow{v}_F$$

des Schiffes 10 als Differenzwinkel $\epsilon$ bezeichnet. Der Neigungswinkel $\beta$ kann als momentane Neigung der Kiellinie 11 oder der ngsachse des Schiffes 10 gegenüber der Horizontalen oder als Auslenkung der Hochachse 12 des Schiffes 10 gegenüber der Vertikalen mittels eines im Schiff 10 vorhandenen Inklinometers oder sonstigen Winkelgebers gemessen werden.

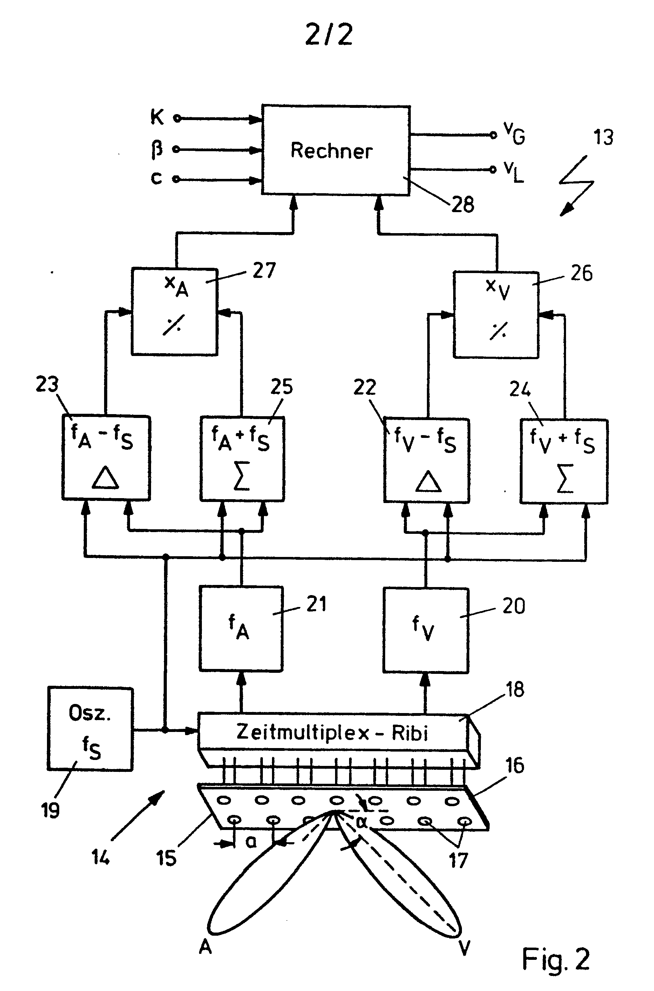

Das Schiff 10 besitzt ein Dopplerlog 13, wie es in Fig. 2 im Blockschaltbild dargestellt ist. Das Dopplerlog 13 weist eine Sende- und Empfangseinrichtung 14 zum Aussenden gebündelter Wellenenergie in zwei selektive Abstrahlrichtungen V, A und zum Empfangen von reflektierter Wellenenergie aus diesen Abstrahlrichtungen auf. Hierzu hat die Sende- und Empfangseinrichtung 14 eine Unterwasserantenne oder Basis 15 mit einer Vielzahl von in einer Ebene 16 angeordneten Wandlern 17, die hintereinander oder versetzt zueinander in Längsrichtung der Basis 15 mit konstantem Abstand a voneinander aufgereiht sind. Die Basis 15 ist parallel zur Längsachse des Schiffes 10 an dessen oder in dessen Kiel ein- oder angebaut, so daß die Ebene 16 in etwa mit der Kiellinie 11 des Schiffes 10 fluchtet.

Die Wandler 17 sind mit einem an sich bekannten Richtungsbildner 18 verbunden, der im Zeitmultiplex die Wandler 17 zum Aussenden von gebündelter Wellenenergie und zum Empfangen reflektierter Wellenenergie (hier Schall) ansteuert, und zwar so, daß in beiden Abstrahlrichtungen V, A abwechselnd gesendet und empfangen wird. Die Abstrahlrichtung V liegt um einen Winkel $\alpha$ gegen die Kiellinie 11 oder Längsachse des Schiffes 10 geneigt in Vorausrichtung, die Abstrahlrichtung A um den gleichen Winkel $\alpha$ in Achterausrichtung des Schiffes 10. Die Abstrahlrichtungen V, A werden in bekannter Weise durch entsprechende Phasenverschiebung $\phi$ der von einem Oszillator 19 erzeugten Sendesignale mit der Sendefrequenz $f_S$ und der von den einzelnen Wandlern 17 empfangenen Wandlersignale im Richtungsbildner 18 generiert, gemäß Gl.

$$\cos \alpha = \frac{n \cdot c}{a \cdot f_S} , \qquad (1)$$

wobei c die Schallgeschwindigkeit im Wasser, $f_S$ die Sendefrequenz und $n = \phi/(2\pi)$ die auf die Sendeperiode normierte Phasenverschiebung $\phi$ der Sende- bzw. Emp fangssignale benachbarter Wandler 17 ist. Wird der Wandlerabstand a zu $\lambda/\sqrt{8}$ gewählt, so ergibt sich bei einer Phasenverschiebung von $\phi = 90°$ eine Abstrahlrichtung V, A von $\alpha = 45°$. Im Empfangsfall werden die Wandlersignale phasenverschoben aufsummiert, wobei die Phasenverschiebung $\phi$ bei einem Winkel von $\alpha = 45°$ wiederum $\phi = +90°$ bzw. $\phi = -90°$ beträgt. Am Ausgang des Richtungsbildners 18 stehen zwei Ausgangssignale an, die die Empfangssignale aus den beiden Empfangsrichtungen V, A repräsentieren. Jedem Ausgang ist ein Frequenzanalysator 20. 21 nachgeschaltet, der die dopplerbehaftete Frequenz $f_V$ bzw. $f_A$ der Empfangssignale ermittelt. Ein solcher Frequenzanalysator kann beispielsweise als digitale Frequenznachlaufschaltung ausgebildet sein, wie sie in der DE-PS 25 01 714 beschrieben ist. Die Differenz zwischen der Empfangsfrequenz $f_V$, $f_A$ und der Sendefrequenz $f_S$ ist die Dopplerfrequenz, auch Dopplerverschiebung genannt.

Jedem Frequenzanalysator 20, 21 ist ein Differenzbildner 22 bzw. 23 und ein Summierer 24 bzw. 25 nachgeschaltet. Die anderen Eingänge dieser Differenzbildner 22, 23 und Summierer 24, 25 sind mit dem Oszillator 19 verbunden und somit mit der Sendefrequenz $f_S$ belegt. Die jeweils einem Frequenzanalysator 20, 21 zugeordneten Differenzbildner 22 bzw. 23 und Summierer 24 bzw. 25 sind an einem Quotientenbildner 26, 27 angeschlossen, deren Ausgangsgrößen $x_V$ bzw. $x_A$ einem Rechner 28 zugeführt sind. Der Rechner 28 erhält weiterhin als Eingangsgrößen die Schallgeschwindigkeit c in Wasser, den momentanen Neigungswinkel $\beta$ des Schiffes 10 und eine dem Dopplerlog 13 immanente Systemkonstante K zugeführt.

Die Systemkonstante K berechnet sich zu

$$K = \frac{1}{n} \cdot a \cdot f_S \qquad (2).$$

Der Rechner 28 berechnet aus den ihm zugeführten Eingangsgrößen $x_V$, $x_A$, c, $\beta$ und K den Betrag der momentanen Schiffsgeschwindigkeit $v_F$ gemäß

$$v_F = \frac{K}{2} \sqrt{(x_V - x_A)^2 + (x_V + x_A)^2 \cdot \frac{c^2}{K^2 - c^2}} \qquad (3),$$

den für die Ablage des momentanen Geschwindigkeitsvektors

$$\overrightarrow{v_F}$$

von der Kiellinie 11 charakteristischen Hilfswinkel $\tau$ des Schiffes 10 gemäß

$$\tau = \frac{1}{2} \text{ arc cos } (-\frac{c}{v_F} \cdot x_A) - \frac{1}{2} \text{ arc cos } (\frac{c}{v_F} \cdot x_V) \qquad (4)$$

und bestimmt aus dem Neigungswinkel $\beta$ und dem Hilfswinkel $\tau$ einen Differenzwinkel $\epsilon$ gemäß:

$$\mathcal{E} = \beta - \tau \qquad (5),$$

der die Winkelablage des momentanen Geschwindigkeitsvektors

$$\overrightarrow{v_F}$$

von der Horizontalen angibt. Aus dem berechneten Betrag der Schiffsgeschinindigkeit $v_F$ und dem Differenzwinkel $\epsilon$ wird die Schiffsgeschwindigkeit $v_G$ über Grund als horizontale Geschvindigkeitskomponente gemäß

$$v_G = v_F \cdot \cos \mathcal{E} \qquad (6)$$

berechnet.

Diese Schiffsgeschwindigkeit $v_G$ wird an dem Ausgang des Rechners 28 ausgegeben und angezeigt.

Bei Untervasserschiffen ist es zusätzlich möglich, die Sink- oder Steiggeschwindigkeit $v_L$ als vertikale Geschwindigkeitskomponente zu berechnen gemäß

$$v_L = v_F \cdot \sin \epsilon \qquad (7).$$

Auch diese Sink- oder Steiggeschwindigkeit $v_L$ des Schiffes 10 in Lot- oder Vertikalrichtung wird vom Rechner 28 ausgegeben und kann in einer Anzeigevorrichtung dargestellt werden.

Es ist selbstverständlich möglich, auch die Funktionen der Differenzbildner 22, 23, der Summierer 24, 25 und der Quotientenbildner 26, 27 mit in den Rechner 28 zu integrieren. In diesem Fall würden die dopplerbehafteten Empfangsfrequenzen $f_V$, $f_A$ und die Sendefrequenz $f_S$ dem Rechner 28 unmittelbar zugeführt, der dann in gleicher Weise die Differenzfrequenzen $f_A$-$f_S$ bzw. $f_V$-$f_S$ und die Summenfrequenzen $f_A + f_S$ bzw. $f_V + f_S$ errechnet und dann durch ins Verhältnissetzen der Differenzfrequenzen und Summenfrequenzen die Werte $x_A$ und $x_V$ bestimmt.

Der Funktionsweise des beschriebenen Dopplerlogs liegt folgendes Meßverfahren zugrunde:

Mittels der Sende- und Empfangseinrichtung 14 werden unter einem Winkel $\alpha$ gegen die Schiffslängsachse sowohl in Vorausrichtung V als auch in Achterausrichtung A akustische Signale mit der Sendefrequenz $f_S$ abgestrahlt und reflektierte akustische Signale empfangen. Für jede Sende- und Empfangsrichtung werden die Empfangsfrequenzen $f_V$ und $f_A$ der EmpFangssignale ermittelt, Die Empfangsfrequenzen $f_V$, $f_A$ werden getrennt jeweile mit der Sendefrequenz $f_S$ verknüpft, und zwar einmal additiv und einmal subtraktiv, so daß jeweils einerseits eine Frequenzdifferenz $f_V$-$f_S$ bzw, $f_A$-$f_S$ und andererseits eine Frequenzsumme $f_V + f_S$ bzw, $f_A + f_S$ entsteht, Für jede Sende- und Empfangsrichtung V, A werden Frequenzdifferenz und Frequenzsumme ins Verhältnis gesetzt und damit ein Quotient $x_V$ bzw, $X_A$ gemäß:

$$x_V = \frac{f_V - f_S}{f_V + f_S} \qquad (8),$$

$$x_A = \frac{f_A - f_S}{f_A + f_S} \qquad (9)$$

ermittelt, Nunmehr wird die Schallgeschwindigkeit c in Wasser durch Messung bestimmt oder aus Tabellen entnommen und die momentane Schiffsgeschwindigkeit $v_F$ berechnet gemäß

$$v_F = \frac{c}{2 \cos \alpha} \cdot \sqrt{(x_V - x_A)^2 + (x_V + x_A)^2 \cot^2 \alpha} \qquad (10).$$

Für Binnenschiffe, die zwar einen Trimm aufweisen können, jedoch kaum starken Wellenbewegungen ausgesetzt sind und daher kaum stampfen, kann der errechnete Betrag der Schiffsgeschwindigkeit $v_F$ unmittelbar als tatsächliche Schiffsgeschwindigkeit $v_G$ über Grund ausgegeben werden, Die Genauigkeit der Geschwindigkeitsausgabe ist wie eingangs beschrieben. Bei Seeschiffen wird die Geschwindigkeitsbestimmung jedoch noch durch Stampfbewegungen des Schiffes oder durch Abreiten von Wellenbergen sowie bei Untervasserschiffen durch Schrägfahrten im Wasser erheblich beeinflußt. Um hier die angegebene gewünschte Genauigkeit in der Geschwindigkeitsbestimmung zu erreichen, wird in einem weiteren Verfahrensschritt zunächst aus der berechneten Schiffsgeschwindigkeit $v_F$ ein Hilfswinkel $\tau$ gemäß

$$\tau = \alpha - \text{arc} \cos \left(\frac{c}{v_F} \cdot x_V\right) \qquad (11)$$

oder

$$\tau = -\alpha + \text{arc} \cos \left(- \frac{c}{v_F} \cdot x_A\right) \qquad (12)$$

berechnet, der die Winkelablage des momentanen Geschwindigkeitsvektors

$$\vec{v}_F$$

von der Kiellinie 11 oder Längsachse des Schiffes 10 angibt. Dieser Hilfswinkel $\tau$ wird von dem mittels des Inklinometers gemessenen Neigungswinkel $\beta$ abgezogen und damit ein Differenzwinkel $\epsilon$ bestimmt, der die Lage des momentanen Geschwindigkeitsvektors

$$\overrightarrow{v_F}$$

bezüglich der Horizontalen kennzeichnet. Nunmehr werden die Schiffsgeschwindigkeit $v_G$ über Grund als die Horizontalkomponente und die Sink- oder Steiggeschwindigkeit $v_L$ einem Unterwasserschiffes als die Vertikal- oder Lotkomponente der Schiffsgeschwindigkeit $v_F$ ausgegeben. Diese Komponenten werden durch Multiplikation der berechneten Schiffsgeschwindigkeit $v_F$ mit dem Kosinus bzw. Sinus des Differenzwinkels $\epsilon$ bestimmt.

Da der Abstrahlwinkel $\alpha$ und die Schallgeschwindigkeit c in Wasser gemäß Gl. (1) miteinander verknüpft sind, ergeben sich mit den Beziehungen

$$\frac{c}{\cos \alpha} = K \qquad (13)$$

**und**

$$\cot^2 \alpha = \frac{c^2}{K^2 - c^2} \qquad (14)$$

die oben angegebene Gl. (3). Durch Addition der Gl. (11) und (12) erhält man die Gl. (4), in welcher der Abstrahlwinkel $\alpha$ eliminiert ist, so daß der Hilfswinkel $\tau$ anstelle nach Gl. (11) oder (12) auch nach Gl. (4) berechnet werden kann.

Das beschriebene Verfahren setzt voraus, daß das Schiff 10 zumindest in der Meßphase im wesentlichen geradlinig fährt und keine Geschwindigkeitskomponenten im Azimut auftreten. Will man jedoch bei der Geschwindigkeitsmessung die Einflüsse von Drift und Kurvenfahren berücksichtigen, so ist das gleiche vorstehend beschriebene Verfahren zusätzlich in einer Ebene quer zur Schiffslängsachse durchzuführen. Die Sende- und Empfangsrichtungen liegen dann in einer Ebene mit der zur Schiffslängsachse rechtwinkligen Schiffsquerachse und um einen Winkel $\gamma$ gegen letztere in Backbord- und Steuerbordrichtung geneigt. Der Winkeln $\gamma$ kann den gleichen Wert wie der Winkel $\alpha$ aufweisen, was jedoch nicht erforderlich ist. Alle vorstehend angegebenen Gleichungen gelten in gleicher Weise, wobei nur der Winkel $\alpha$ durch $\gamma$ und die Indizes V, A für Voraus- und Achterausrichtung durch die Indizes B und S für Backbord und Steuerbord zu ersetzen sind. Zur Gewinnung der resultierenden Schiffsgeschwindigkeit in Horizontalrichtung müssen dann die in beiden rechtwinklig zueinander stehenden Meßebenen erhaltenen Geschwindigkeitskomponenten $V_G$ vektoriell zusammengesetzt werden.

**Ansprüche**

1. Verfahren zur Bestimmung der Geschwindigkeit eines Wasserfahrzeugs, bei welchem unter einem gleichen Winkel $\alpha$ gegen die Fahrzeuglängsachse in Fahrzeugvoraus- und Fahrzeugachterausrichtung akustische Signale mit Sendefrequenz ($F_S$) abgestrahlt werden und die am Gewässergrund reflektierten akustischen Signale empfangen, werden die Empfangsfrequenzen $f_V$, $f_A$ der Empfangssignale ermittelt werden und aus den in jeder Empfangsrichtung erhaltenen Empfangsfrequenzen ($f_V$, $f_A$) und aus der Sendefrequenz ($f_S$) jeweils die Dopplerfrequenzen als Frequenzdifferenzen ($f_V$-$f_S$, $f_A$-$f_S$) bestimmt werden, dadurch gekennzeichnet, daß aus den in jeder Empfangsrichtung (V, A) erhaltenen Empfangsfrequenzen ($f_V$, $f_A$) und aus der Sendefrequenz ($f_S$) jeweils die Frequenzsumme ($f_V$+$f_S$ bzw. $f_A$+$f_S$) bestimmt wird, daß von der für jede Empfangsrichtung (V, A) ermittelten Frequenzdifferenz ($f_V$-$f_S$, $f_A$-$f_S$) und Frequenzsumme ($f_V$+$f_S$, $f_A$+$f_S$) ein Quotient $x_V$ für die Vorausrichtung und ein Quotient $x_A$ für die Achterausrichtung gebildet wird, daß daraus unter Berücksichtigung der tatsächlichen Schallgeschwindigkeit c in Wasser die Fahrzeuggeschwindigkeit $v_F$ gemäß

$$v_F = \frac{c}{2 \cos \alpha} \sqrt{(x_V - x_A)^2 + (x_V + x_A)^2 \cot^2 \alpha}$$

berechnet wird, daß laufend der momentane Neigungswinkel ($\beta$) des Fahrzeugs (10) gegen die Horizontale gemessen wird, daß aus der berechneten Fahrzeuggeschwindigkeit $v_F$ ein die Ablage des momentanen Geschwindigkeitsvektors

$$(\vec{v}_F)$$

von der Fahrzeuglängsachse angebender Hilfswinkel $\tau$ gemäß

$$\tau = \alpha - \arccos \left( \frac{c}{v_F} \cdot x_V \right)$$

oder

$$\tau = -\alpha + \arccos \left( -\frac{c}{v_F} \cdot x_A \right)$$

oder

$$\tau = \frac{1}{2} \arccos \left( -\frac{c}{v_F} \cdot x_A \right) - \frac{1}{2} \arccos \left( \frac{c}{v_F} \cdot x_V \right)$$

berechnet wird, daß durch Subtraktion von Neigungsund Hilfswinkel ($\beta$, $\tau$) ein die Winkelablage des momentanen Geschwindigkeitsvektors

$$(\vec{v}_F)$$

von der Horizontalen angebender Differenzwinkel ($\epsilon$) bestimmt wird und daß die berechnete Fahrzeuggeschwindigkeit $v_F$ mit dem Kosinus des Differenzwinkels ($\epsilon$) multipliziert und die so gewonnene horizontale Geschwindigkeitskomponente als tatsächliche Fahrzeuggeschwindigkeit ($v_G$) über Grund ausgegeben wird.

2. Verfahren nach Anspruch 1, dadurch gekennzeichnet, daß die berechnete Fahrzeuggeschwindigkeit $v_F$ mit dem Sinus des Differenzwinkels ($\epsilon$) multipliziert und die so gewonnene vertikale Geschwindigkeitskomponente als Sink- oder Steiggeschwindigkeit ($v_L$) des Fahrzeugs (10) ausgegeben wird.

3. Verfahren nach Anspruch 1 oder 2 unter Verwendung einer Sende- und Empfangseinrichtung, die eine Vielzahl von in Fahrzeuglängsrichtung im Abstand (a) voneinander äquidistant angeordneten Schallwandlern (17) aufweist und bei welcher die um gleiche Winkel ($\phi$) gegeneinander phasenverschobenen Wandlersignale zu Sende- und/oder Empfangssignalen addiert werden, dadurch gekennzeichnet, daß der Term $c/\cos \alpha$ zu K und der Term $\cot^2 \alpha$ zu $c^2/K^2-c^2$) gesetzt wird, wobei K eine durch die Sende- und Empfangseinrichtung (14) vorgegebene Konstante ist und sich zu $a \bullet f_S/n$ ergibt, wobei $f_S$ die Sendefrequenz, a der Wandlerabstand und n die auf die Periode bezogene Phasenverschiebung ($\phi$) der Wandlersignale ist.

4. Verfahren nach einem der Ansprüche 1 bis 3, dadurch gekennzeichnet, daß zusätzlich rechtwinklig zur Fahrzeuglängsachse und unter einem gleichen Winkeln $\gamma$ gegen die Fahrzeugquerachse geneigt Signale mit Sendefrequenz in Backbord- und Steuerbordrichtung abgestrahlt und die am Gewässergrund reflektierten akustischen Signale empfangen werden, daß die Empfangsfrequenzen der Empfangssignale ermittelt und zur Bestimmung einer Fahrzeuggeschwindigkeit in Backbord- oder Steuerbordrichtung in den gleichen Verfahrensschritten der Summen-, Differenz- und Quotientenbildung verarbeitet werden, daß aus den Quotienten unter identischer Berücksichtigung der Schallgeschwindigkeit (c) in Wasser und des Abstrahlwinkels ($\gamma$) in gleicher Weise die Fahrzeuggeschwindigkeit in Backbord- oder Steuerbordrichtung berechnet wird und daß eine resultierende Fahrzeuggeschwindigkeit über Grund durch vektorielle Verknüpfung der in Längs- und Querrichtung bestimmten Fahrzeuggeschwindigkeiten über Grund gewonnen wird.

## Claims

1. A method for determining the speed of a sea-borne vessel, wherein acoustic signals are radiated with a transmission frequency ($f_S$) at an identical angle $\alpha$ towards the vessel longitudinal axis in the vessel bow and stern alignment; the acoustic signals reflected on the sea bottom are received; the reception frequencies ($f_V$, $f_A$), of the reception signals are determined; and the Doppler frequencies are in each case determined as frequency differences ($f_V - f_S$, $f_A - f_S$) from the reception frequencies ($f_V$, $f_A$) received in each direction of reception and the transmission frequency ($f_S$), characterized in that in each case the frequency sum ($f_V + f_S$; $f_A + f_S$) is determined from the reception frequencies ($f_V$, $f_A$) received in each direction of reception (V, A) and the transmission frequency ($f_S$); from the frequency difference ($f_V - f_S$, $f_A - f_S$) determined for each direction of reception (V, A) and the frequency sum ($f_V + f_S$, $f_A + f_S$) a quotient $x_V$ is formed for the bow alignment and a quotient $x_A$ for the stern alignment; the vessel's speed $v_F$ is calculated therefrom, having regard to the actual speed of sound in water c, in accordance with

$$v_F = \frac{c}{2 \cos \alpha} \sqrt{(x_V - x_A)^2 + (x_V + x_A)^2 \cot^2 \alpha};$$

the instantaneous angle of inclination ($\beta$) of the vessel (10) is continuously measured in relation to the horizontal; an auxiliary angle ($\tau$) is calculated from the vessel speed $v_F$ which states the deviation of the instantaneous speed vector

$$(\vec{v}_F)$$

of the vessel longitudinal axis, in accordance with

$$\tau = \alpha - \arccos \frac{(\frac{c}{v_F} \cdot x_V)}{}$$

or

$$\tau = -\alpha + \arccos (- \frac{c}{v_F} \cdot x_A)$$

or

$$\tau = \tfrac{1}{2} \arccos (- \frac{c}{v_F} \cdot x_A) - \tfrac{1}{2} \arccos (\frac{c}{v_F} \cdot x_V);$$

by subtraction from the angle of inclination ($\beta$) and the auxiliary angle ($\tau$) a differential angle ($\epsilon$) is determined which states the angular deviation of the instantaneous speed vector

$$(\vec{v}_F)$$

from the horizontal; and the calculated vessel speed $v_F$ is multiplied by the cosine of the differential angle ($\epsilon$) and the horizontal speed component thus obtained is outputted as the actual vessel speed ($v_G$) over the bottom.

2. A method according to claim 1, characterized in that the calculated vessel speed $v_F$ is multiplied by the sine of the differential angle ($\epsilon$) and the vertical speed component thus obtained is outputted as the falling or rising speed ($v_L$) of the vessel (10).

3. A method according to claims 1 or 2, using a transmission and receiving system which has a plurality of sonic transducers (17) disposed equidistantly at a distance (a) from one another and wherein the transducer signals, shifted in phase in relation to one another by identical angles ($\phi$) are added up to transmission and/or reception signals, characterized in that the term $c/\cos \alpha$ is set as K and the term $\cot^2 a$ is set as $c^2/K^2\text{-}c^2$), where K is a constant given by the transmission and reception system (14) and is obtained as $a.f_S/n$, $f_S$ being the transmission frequency, a the transducer distance and n the phase shift ($\phi$) of the transducer signals referred to the period.

4. A method according to one of claims 1 to 3, characterized in that in addition, inclined at right angles to the vessel longitudinal axis and at an identical angle $\gamma$ in relation to the vessel transverse axis, signals are radiated at transmission frequency in starboard and port directions and the acoustic signals reflected from the sea bottom are received; the reception frequencies of the reception signals are determined and processed in the same process steps of sum, difference and quotient formation to determine the vessel speed in the starboard or port direction; the speed of the vessel in the starboard or port direction is calculated in the same manner from the quotients, taking into account in the same manner the speed of sound in water (c) and the radiation angle ($\gamma$); and a resulting vessel speed over the bottom is obtained by vectorial connection of the vessel speeds determined in the longitudinal and transverse directions.

**Revendications**

1. Procédé pour déterminer la vitesse d'un bateau, selon lequel on émet des signaux acoustiques possédant une fréquence d'émission ($f_S$) sous un angle constant ($\alpha$ ) par rapport à l'axe longitudinal du bateau dans la direction de la proue et dans la direction de la poupe du bateau, et on reçoit les signaux acoustiques réfléchis au fond de la mer, on détermine les fréquences de réception ($f_V$, $f_A$) des signaux reçus et, respectivement, les fréquences Doppler en tant que différences de fréquences ($f_V\text{-}f_S$, $f_A\text{-}f_S$) à partir des fréquences de réception ($f_V$,$f_A$) reçues dans chaque direction de réception et à partir de la fréquence d'émission ($f_S$) caractérisé en ce que l'on détermine respectivement la somme des fréquences ($f_V + f_S$ ou $f_A + f_S$) à partir des fréquences de réception ($f_V$,$f_A$) obtenues dans chaque direction de réception (V,A) et à partir de la fréquence d'émission ($f_S$), en ce que l'on forme pour chaque direction de réception (V,A) un quotient $x_V$ pour la direction tournée vers la proue et un quotient $x_A$ pour la direction tournée vers la poupe à partir de la différence des fréquences ($f_V\text{-}f_S$, $f_A\text{-}f_S$) et de la somme des fréquences ($f_V + f_S$, $f_A + f_S$), et de la somme des fréquences ($f_V + f_S$, $f_A + f_S$), en ce qu'on calcule, à partir de ces quotients, et ce en tenant compte de la vitesse effective du son (c) dans l'eau, la vitesse $v_F$ du bateau conformément à

$$V_F = \frac{c}{2 \cos} \sqrt{(x_V - x_A)^2 + (x_V + x_A)^2 \cot g^2} \quad ,$$

en ce que l'on mesure en permanence l'angle instantané d'inclinaison ($\beta$) du bateau (10) par rapport à l'horizontale, en ce qu'à partir de la vitesse calculée $v_F$ du bateau, on calcule un angle auxiliaire indiquant le décalage du vecteur vitesse instantané $\bar{v}_F$ par rapport à l'axe longitudinal du navire conformément à

9

$$\zeta = -\arccos\left(\frac{c}{v_F} \cdot x_V\right)$$

ou

$$\zeta = - + \arccos\left(- \frac{c}{v_F} \cdot x_A\right)$$

ou

$$\zeta = \frac{1}{2}\arccos\left(- \frac{c}{v_F} \cdot x_A\right) - \frac{1}{2}\arccos\left(\frac{c}{v_F} \cdot x_V\right)$$

en ce que l'on détermine un angle différentiel ($\epsilon$) indiquant le décalage angulaire du vecteur vitesse instantané ($\overline{V}_F$) par rapport à l'horizontale par soustraction de l'angle d'inclinaison et de l'angle auxiliaire ($\beta$, $\tau$), et en ce que l'on multiplie la vitesse calculée $v_F$ du navire par le cosinus de l'angle différentiel ($\epsilon$), la composante horizontale de vitesse, ainsi obtenue, étant délivrée en tant que vitesse réelle ($v_G$) du navire par rapport au fond.

2. Procédé suivant la revendication 1, caractérisé par le fait que la vitesse calculée $v_F$ du navire est multipliée par le sinus de l'angle différentiel ($\epsilon$) et que la composante verticale de vitesse ainsi obtenue est délivrée en tant que vitesse de descente ou de montée ($v_L$) du navire (10).

3. Procédé selon la revendication 1 ou 2, mis en oeuvre moyennant l'utilisation d'un dispositif d'émission et de réception, qui comporte une multiplicité de transducteurs acoustiques (17) disposés en étant équidistants les uns des autres d'une distance (a) dans la direction longitudinale du navire, et selon on additionne lequel les signaux des transducteurs, qui sont réciproquement déphasés du même angle ($\phi$), pour former des signaux d'émission et/ou des signaux de réception, caractérisé en ce que le terme ($c/\cos\alpha$) est posé égal à K et que le terme $\cot g^2\,\alpha$ est posé égal à $c^2/(K^2-c^2)$, K étant une constante prédéterminée par la direction d'émission et la direction de réception (14) et étant égal à $a.f_s/n$, $F_s$ étant la fréquence d'émission, a la distance entre les transducteurs et n le déphasage ($\phi$), rapporté à la période, des signaux des transducteurs.

4. Procédé selon l'une des revendications 1 à 3, caractérisé en ce que l'on émet en outre des signaux possédant la fréquence d'émission dans la direction babord et dans la direction tribord perpendiculairement à l'axe longitudinal du bateau et sous un même angle par rapport à l'axe transversal du bateau et l'on reçoit les signaux acoustiques réfléchis sur le fond de la mer, en ce que l'on détermine les fréquences de réception des signaux reçus et on les traite pour la détermination d'une vitesse du bateau dans la direction babord ou dans la direction tribord, selon les mêmes pas opératoires de formation de la somme, de la différence et du quotient, en ce que l'on calcule la vitesse du véhicule dans la direction babord ou dans la direction tribord de la même manière à partir des quotients, en tenant compte, d'une manière identique, de la vitesse du son (c) dans l'eau et de l'angle d'émission ($\gamma$) et en ce que l'on obtient une vitesse résultante du bateau par rapport au fond au moyen de la combinaison vectorielle des vitesses du bateau, déterminée dans la direction longitudinale et dans la direction transversale, par rapport au fond.

Fig. 1

## 2/2

Fig. 2